# EUROPEAN PATENT APPLICATION

(11) **EP 4 477 084 A1**
(43) Date of publication of application: **18.12.2024**
(21) Application number: 24181020.9
(22) Date of filing: 10.06.2024
(51) Int. Cl.: A23C 7/02, B01D 61/02, C02F 1/44, A01J 7/02, C02F 1/66, C02F 103/32

(54) **METHOD AN APPARATUS FOR TREATING A CLEAN-IN-PLACE LIQUID**

(30) Priority: 11.06.2023 EP 23178569
(71) Applicant: Tetra Laval Holdings & Finance S.A., 1009 Pully (CH)
(72) Inventor: Vigen Hansen, Carsten, 8600 SIlkeborg (DK); Larsen, Arne, 8600 Silkeborg (DK)
(74) Representative: Tetra Pak - Patent Attorneys SE

(57) **Abstract**

A system (100) for treating a clean-in-place, C!P, liquid is disclosed. The system (100) comprises a spent CIP tank (120) configured to provide a spent CIP liquid (C1), the spent CIP liquid (C1) comprising residues (R), a water source (110) configured to provide water (W), the water (W) comprising calcium (C), a filtration unit (130), arranged downstream the spent CIP tank (120) and the water source (110), and a recovered CIP tank (140), arranged downstream the filtration unit (130), characterized in that the filtration unit (130) is configured to receive the spent CIP liquid (C1) from the spent CIP tank (120) and the water (W) from the water source (110), to remove the residues (R) and calcium (C) from the spent CIP liquid (C1) and the water (W) to obtain a recovered CIP liquid (C2), and to output the recovered CIP liquid (C2) and the water (W) to the recovered CIP tank (140).

## Description

### Technical Field

The invention relates to a system and a method for treating a clean-in-place (CIP) liquid. The invention also relates to a production system and a method of increasing a solid content of a food product.

### Background Art

Cleaning-in-place (CIP) equipment is commonly used to clean interior surfaces of equipment e.g. pipes and vessels in various industries such as food, dairy, and beverage industry. The CIP equipment typically use a CIP solution comprising an alkaline detergent such as caustic soda (NaOH) to remove residues such as sugar, fat, protein, and mineral salt from such interior surfaces. The CIP equipment is advantages for cleaning as they allow for a fast and reproducible cleaning with less exposure of a user to chemicals and also require less interaction of the user, compared to manual cleanings.

The CIP solution is typically cleaned and reused for a number of times e.g. five to ten times to minimize cost and chemical usage. Hence, a composition of such cleaned CIP solution such as caustic soda and water content needs to be adjusted before being used again, to obtain an efficient and reproducible cleaning. Therefore, the caustic soda and the water is typically added into the cleaned CIP solution, prior to being used again for cleaning.

However, in areas having hard water, such adjustment of the composition of the cleaned CIP solution may require additional infrastructure, equipment such as an extra tank and/or additional cleaning process(es) and may hence require additional time, space, and cost. Therefore, there is a need for an improved CIP equipment and an improved method for cleaning a CIP solution, for use in the areas having hard water.

### Summary

In conventional CIP systems, water is typically added into a tank e.g. a storage tank containing the cleaned CIP solution. Therefore, in the areas having hard water, calcium of the water precipitates over time on interior surfaces of the storage tank. The cleaned CIP solution typically has a temperature in the range of 60-70 ° which may accelerate the precipitation of calcium. The precipitated calcium may e.g. form a thick layer on the interior surfaces of the storage tank and thus such layer needs to be cleaned to e.g. avoid contamination of the cleaned CIP solution and to obtain a reproducible cleaning using such cleaned CIP solution. Therefore, one solution may be to filter the water and to remove calcium, prior to adding the water into the storage tank. However, this solution requires an additional filter for the water and hence additional space and cleaning processes to clean the additional filter. Another solution may be to remove/clean the precipitated calcium from the interior surfaces of the storage tank. However, this solution requires an extra tank to store the cleaned CIP solution while cleaning the storage tank and hence requires additional space and cleaning processes to clean the interior surfaces of the storage tank.

It is an object of the invention to at least partly overcome one or more of the above-identified limitations of the prior art. In particular, it is an object of the invention to provide an improved system for treating a CIP liquid, particularly for use in areas having hard water, in terms of simplicity, efficiency and user-friendliness while further minimizing chemical usage, maintenance, required space and cost.

To solve these objects, according to a first aspect of the invention, a system for treating a clean-in-place (CIP) liquid is provided. The system comprises a spent CIP tank configured to provide a spent CIP liquid. The spent CIP liquid comprises residues. The system further comprises a water source configured to provide water. The water comprises calcium. The system further comprises a filtration unit, arranged downstream the spent CIP tank and the water source. The system further comprises a recovered CIP tank, arranged downstream the filtration unit. The system is characterized in that the filtration unit is configured to receive the spent CIP liquid from the spent CIP tank and the water from the water source, to remove the residues and calcium from the spent CIP liquid and the water to obtain a recovered CIP liquid, and to output the recovered CIP liquid and the water to the recovered CIP tank.

The system is advantageous in that the filtration unit is configured to remove the residues and calcium from the spent CIP liquid and the water to obtain the recovered CIP liquid. The filtration unit is configured to pass other components of the spent CIP liquid such as detergents and other compounds of the water than the calcium.

The system is advantageous in that unfiltered water i.e. the water comprising calcium is provided and received by the filtration unit, as the same filtration unit is configured to remove both the residues and calcium from the spent CIP liquid and the water. Thereby, no additional infrastructure and equipment such as an additional filter, for removing calcium from the water, or an additional tank, for cleaning precipitated calcium on interior surfaces of the spend CIP tank, is required. Also, no additional space and/or cleaning process(es) for cleaning the precipitated calcium from the additional filter or from the interior surfaces of the spend CIP tank is required.

Furthermore, the water, received by the filtration unit, lowers a temperature of the spent CIP liquid. Thus, this facilitates cooling of the spent CIP liquid to a lower temperature that is more suitable for the filtration unit. For instance, a suitable temperature for the filtration unit may be at most 70° and the spent CIP liquid may have a temperature in the range of 80° to 90°. Thus, the water may lower the temperature of the spent CIP liquid to e.g. 70° or to a lower temperature.

In overall, the first aspect of the invention allows for a simpler, more efficient and more user-friendy system for treating the CIP liquid, for use in the areas having hard water, than the conventional systems. It also allows for reducing maintenance or cleaning time, cost, chemical usage, and required space and hence allows for a more economical- and environmental-friendly system for treating the CIP liquid, for use in the areas having hard water.

The term "spent CIP liquid" refers to a contaminated CIP liquid or a used CIP liquid i.e. the CIP liquid with e.g. residues and dirt. The spent CIP liquid may comprise any of or any combination of detergents, water, residues or dirt. The residues may comprise any of or any combination of sugar, fat, protein, mineral salt or calcium. The detergents for heated surfaces may comprise alkaline e.g. caustic soda (NaOH) and acid detergents. The detergents for cold surfaces may comprise alkalis and an acid solution.

The term "recovered CIP liquid" refers to a cleaned CIP liquid i.e. the CIP liquid without the residues and calcium. The recovered CIP liquid may comprise detergents and the water compounds with no calcium or at least with a low concentration of the calcium.

The water source may be arranged upstream the spent CIP tank. The water source may be configured to provide the water into the spent CIP tank such that the water may be received in the filtration unit via the spent CIP tank.

Thereby, the water may directly be provided into the spent CIP tank. This may be advantageous as the water may lower a temperature of the spent CIP liquid in the spent CIP tank and may hence facilitate cooling of the spent CIP liquid to a lower temperature that is more suitable for the filtration unit.

The water source may be arranged upstream the filtration unit. The water source may be connected to the filtration unit. The water source may be configured to provide the water into the filtration unit such that the water may be directly received in the filtration unit i.e. not via the spent CIP tank.

This may be advantageous as the water may lower a temperature of the spent CIP liquid in the filtration unit and may hence facilitate cooling of the spent CIP liquid to a lower temperature that is more suitable for the filtration unit. The term "directly" means that the water is received into the filtration unit without passing through the spent CIP tank.

The system may comprise only one filtration unit that is arranged to receive both the spent CIP liquid and the water before the spent CIP liquid and the water are outputted to the recovered CIP tank. The filtration unit may be configured to remove both the residues and calcium from the spent CIP liquid and the water.

Thereby, the system may not comprise any other filtration unit than the only one filtration unit to remove calcium from the spent CIP liquid and the water. Thus, no additional equipment such as an additional filter may be required to remove calcium from the water either prior to providing the water or subsequent to providing the water. Thereby, no additional infrastructure or additional cleaning processes may be required to remove calcium from the water.

The filtration unit may comprise a nano filtration unit. The nano filtration unit may have a molecular weight cut-off, MWCO, in the range of 150 Da to 1000 Da.

The nano filtration unit may have a filtration capacity or a cut off value, in the range of 150 Da to 1000 Da. The nano filtration unit may allow for removal residues such as part of monovalent ions e.g. sodium and chlorine and calcium.

The system may comprise a pre-filter. The pre-filter may be arranged downstream the spent CIP tank and upstream the filtration unit. The pre-filter may be configured to remove particles, having sizes larger than the residues and calcium, from the spent CIP liquid and the water.

Thereby, the pre-filter may be configured to remove the particles, having sizes larger than the residues and calcium, from the spent CIP liquid before they reach the filtration unit. The pre-filter may not be configured to remove the residues and calcium from the spent CIP liquid. This may in turn allow for using the system, for treating the CIP liquid, in a more efficient manner. For instance, this may allow for using the system for a longer time without needing to clean the filtration unit and hence the system may require less frequent maintenance or cleaning.

The system may comprise a caustic supply source. The caustic supply source may be arranged upstream the recovered CIP tank. The caustic supply source may be configured to provide a concentrated CIP liquid into the recovered CIP tank.

Thereby, the caustic supply source may allow for adjusting/boosting the composition/concentration of the recovered CIP liquid if needed. The caustic supply source may be a tank arranged upstream the recovered CIP tank.

The calcium content of the water may be at least 8 mmol per liter, or at least 16 mmol per liter.

The calcium content of the water may be at least at least 80 mg/L or at least 142 ppm. The calcium content of the water may be at least 8 °dH such as 10-12 °dH.

According to a second aspect of the invention, a production system of increasing a solid content of a food product is provided. The system comprises a system for treating a clean-in-place, CIP, liquid, according to the first aspect of the invention. The production system further comprises an evaporator arranged downstream a recovered CIP tank of the system and configured to receive a liquid food product, to increase a solid content of the liquid food product and to output a liquid component and a concentrated food component. The production system further comprises a recovered CIP line connected between the recovered CIP tank and the evaporator to provide the recovered CIP liquid from the recovered CIP tank of the system into the evaporator. The production system further comprises a spent CIP return line connected between the evaporator and a spent CIP tank of the system to return a spent CIP liquid from the evaporator to the spent CIP tank. The evaporator is configured to receive the recovered CIP liquid from the recovered CIP tank of the system via the recovered CIP line, to clean the evaporator, and to return the spent CIP liquid to the spent CIP tank via the spent CIP return line, subsequent to the cleaning.

The second aspect of the invention generally presents the same or corresponding advantages as the first aspect of the invention. The production system allows for cleaning of the evaporator subsequent to each evaporating process i.e. the production system allows for a continuous and regular cleaning of the evaporator. A temperature of the spent CIP liquid, returning from the evaporator may be in the range of 80-90°. Thus, the water, received by the filtration unit, lowers a temperature of the spent CIP liquid and hence facilitates cooling of the spent CIP liquid to a lower temperature that is more suitable for the filtration unit. The second aspect of the invention allows for a simpler, more efficient and more user friendly production system while minimizing maintenance time, chemical usage cost and required space. The production system, according to the second aspect of the invention, may comprise any another equipment or system, instead of the evaporator, such as a spray dryer, a pasteurizer, or an Ultra-High Treatment (UHT) equipment, etc.

According to a third aspect of the invention, a method for treating a clean-in-place (CIP) liquid is provided. The method comprises the step of providing a spent CIP liquid from a spent CIP tank. The spent CIP liquid comprises residues. The method further comprises the step of providing water from a water source. The water comprises calcium. The method further comprises the step of receiving in a filtration unit the spent CIP liquid from the spent CIP tank and the water from the water source, to remove the residues and calcium from the spent CIP liquid and the water by filtration, to thereby obtain a recovered CIP liquid. The method further comprises the step of outputting the recovered CIP liquid and the water to a recovered CIP tank.

The third aspect of the invention generally presents the same or corresponding advantages as the first aspect of the invention.

The filtration unit may be the only filtration unit that receives both the spent CIP liquid and the water respectively from the spent CIP tank and from the water source before the spent CIP liquid and the water are outputted to the recovered CIP tank. The filtration unit may be the only filtration unit that is configured to remove both the residues and calcium from the spent CIP liquid and the water.

Thereby, no other filtration unit than the only one filtration unit may be required, as the only filtration unit is configured to remove both the residues and calcium from the spent CIP liquid and the water.

The method may further comprise the step of providing the spent CIP liquid into the spent CIP tank prior to the step of providing the spent CIP liquid from the spent CIP tank.

The spent CIP liquid may be provided into the spent CIP tank from another equipment such as an evaporator, a spray dryer, a pasteurizer or a UHT equipment, subsequent to cleaning of the equipment.

The method may further comprise the step of providing a concentrated CIP liquid into the recovered CIP tank subsequent to the step of outputting the recovered CIP liquid and the water to the recovered CIP tank.

Thereby, the method may allow for adjusting/boosting the composition/concentration of the recovered CIP liquid if needed.

According to a fourth aspect of the invention, a method for increasing a solid content of a food product is provided. The method comprises the steps of providing a liquid food product, receiving in an evaporator the liquid food product, to increase a solid content of the liquid food product, and to output a liquid component and a concentrated food component. The method may further comprise the step of receiving a recovered CIP liquid in the evaporator via a recovered CIP line connected between a recovered CIP tank and the evaporator. The method may further comprise the steps of cleaning the evaporator by the recovered CIP liquid, and returning a spent CIP liquid from the evaporator to a spent CIP tank via a spent CIP return line connected between the evaporator and a spent CIP tank, subsequent to the step of cleaning.

The fourth aspect of the invention generally presents the same or corresponding advantages as the second aspect of the invention. The steps of the method for increasing the solid content of the food product may be performed in the same order, as defined above.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 schematically illustrates a system 100 for treating a CIP liquid,
Fig. 2 schematically illustrates a production system 200 of increasing a solid content of a food product F,
Fig. 3 schematically illustrates steps of a method 300 for treating a CIP liquid, and
Fig. 4 schematically illustrates steps of a method 400 for increasing a solid content of a food product F.

### Detailed Description

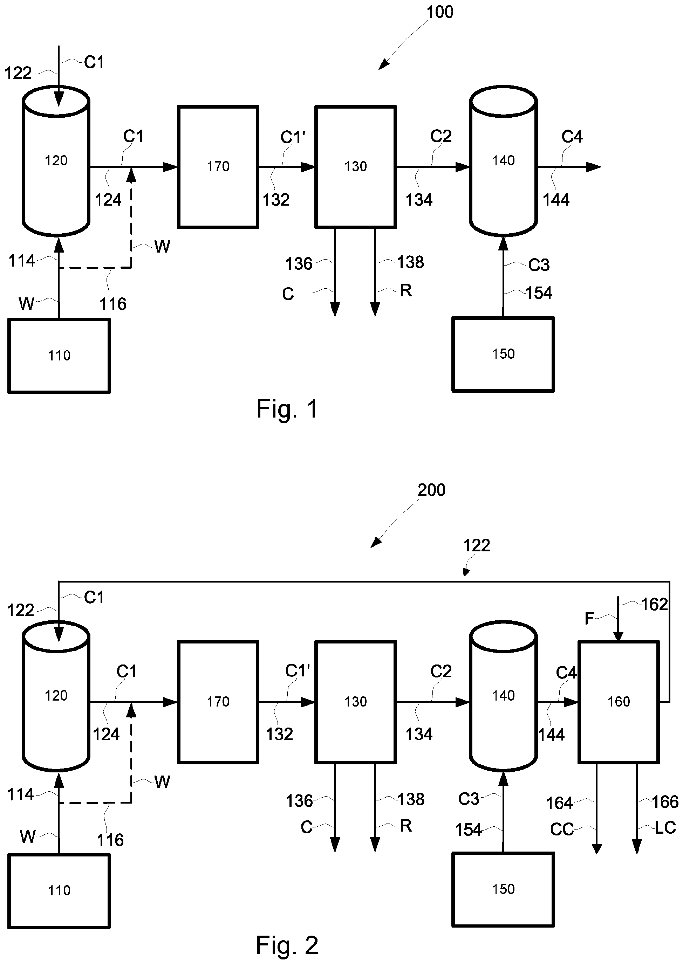

With reference to Fig. 1, a system 100 for treating a CIP liquid is shown. The system 100 comprises a spent CIP tank 120. The spent CIP tank 120 is configured to provide a spent CIP liquid C1. The spent CIP liquid C1 comprises residues R. The spent CIP tank 120 may comprise an inlet 122 to receive the spent CIP liquid C1. The spent CIP tank 120 may comprise more than one inlet. For instance, the spent CIP tank 120 may comprise two inlets 122, 114; one inlet 122 for receiving the spent CIP liquid C1 and another inlet 114 for receiving water W. The spent CIP tank 120 may comprise an outlet 124 to output the spent CIP liquid C1. The spent CIP tank 120 may comprise more than one outlet 124.

The system 100 further comprises a water source 110. The water source 110 is configured to provide water W. The water W comprises calcium C. The calcium C content of the water W is at least 8 mmol per liter, or at least 16 mmol per liter. The water source 110 may be a tank e.g. a water storage tank. The water source may comprise an inlet to receive the water W. The water source 110 may comprise an outlet 114 to output the water W. The water source may comprise more than one outlet e.g. two outlets 114, 116.

The water source 110 may be arranged upstream the spent CIP tank 120. The water source 110 may be configured to provide the water W into the spent CIP tank 120 such that the water W is received in the filtration unit 130 via the spent CIP tank C1. The water source 110 may comprise an outlet 114 to provide the water W into the spent CIP tank 120. In Fig. 1, an outlet 114 of the water source 110 which provides the water W into the spent CIP tank 120 is shown by a solid line arrow. There may be a valve or a pump arranged at the outlet 114 of the water source 110 to provide/output or to pump the water W into the spent CIP tank 120, respectively.

The system 100 further comprises a filtration unit 130. The filtration unit 130 is arranged downstream the spent CIP tank 120 and the water source 110. The filtration unit 130 may comprise an inlet 132 to receive the spent CIP liquid C1. The filtration unit 130 may comprise more than one inlet 132. The outlet 124 of the spent CIP tank 120 may provide the spent CIP liquid C1 into the inlet 132 of the filtration unit 130, as the filtration unit 130 is arranged downstream the spent CIP tank 120. The filtration unit 130 may comprise an outlet 134 to output the recovered CIP liquid C2.

The water source 110 may be arranged upstream the filtration unit 130. The water source 110 may be connected to the filtration unit 130. The water source 110 may be configured to provide the water W into the filtration unit 130 such that the water W is directly received in the filtration unit 130.

The water source 110 may comprise an outlet 116 to provide the water W into the filtration unit 130. In Fig. 1, an outlet 116 of the water source 110 which provides the water W into the filtration unit 130 is shown by a dashed line arrow. There may be a valve or a pump arranged at the outlet 116 of the water source 110 to provide/output or to pump the water W into the filtration unit 130, respectively. The water source 110 may be configured to provide the water W into the outlet 124 of the spent CIP tank 120.

The filtration unit 130 is configured to receive the spent CIP liquid C1 from the spent CIP tank 120 and the water W from the water source 110. The filtration unit 130 is configured to remove the residues R and calcium C from the spent CIP liquid C1 and the water W. The filtration unit 130 is configured to obtain a recovered CIP liquid C2.

Still with reference to Fig. 1, the system 100 comprises a recovered CIP tank 140. The recovered CIP tank 140 is arranged downstream the filtration unit 130. The filtration unit 130 is configured to output the recovered CIP liquid C2 and the water W to a recovered CIP tank 140.

The outlet 134 of the filtration unit 130 may provide the recovered CIP liquid C2 into the recovered CIP tank 140, as the recovered CIP tank 140 is arranged downstream the filtration unit 130. The filtration unit may comprise more than one outlet. For instance, the filtration unit 130 may comprise three outlets134, 136, 138; one outlet 136 for outputting the removed calcium C, another outlet 138 for outputting removed residues R and yet another outlet 134 for outputting the recovered CIP liquid C2. There may be a valve or a pump arranged at the outlet 116 of the filtration unit 130 to provide/output or to pump the recovered CIP liquid C2 and the water W into the recovered CIP tank 140, respectively. The recovered CIP tank 140 may comprise an inlet 134. The recovered CIP tank 140 may comprise more than one inlet 134. The recovered CIP tank 140 may comprise an outlet 144 to output the recovered CIP liquid C2. The recovered CIP tank 140 may comprise more than one outlet 144.

The system 100 may comprise only one filtration unit 130 that is arranged to receive both the spent CIP liquid C1 and the water W before the spent CIP liquid C1 and the water W are outputted to the recovered CIP tank 140. The only one filtration unit 130 may be configured to remove both the residues R and calcium C from the spent CIP liquid C1 and the water W. The filtration unit 130 may comprise a nano filtration unit. The nano filtration unit may have a molecular weight cut-off, MWCO, in the range of 150 Da to 1000 Da. The nano filtration unit may be any conventional and commercially available nano filtration unit.

Still with reference to Fig. 1, the system 100 may comprise a pre-filter 170. The pre-filter 170 may be arranged downstream the spent CIP tank 120. The pre-filter 170 may be arranged upstream the filtration unit 130. The pre-filter 170 may be configured to remove particles, having sizes larger than the residues R and calcium C, from the spent CIP liquid C1 and the water W. The pre-filter 170 may be configured to remove the particles having a size larger than 2 mm from the spent CIP liquid C1. Examples of the particles, having sizes larger than 2 mm, are dirt and dust. The pre-filter 170 may be a mechanical filter. The pre-filter 170 may be any conventional and commercially available mechanical filter. The pre-filter 170 may be cleaned together with the filtration unit 130. The pre-filter 170 may comprise an inlet 124 which may be connected to the outlet 124 of the spent CIP tank 120. There may be a valve or a pump arranged at the outlet 124 of the spent CIP tank 120 to provide/output or to pump the spent CIP liquid C1 into the pre-filter 170, respectively. The pre-filter 170 may comprise an outlet 132 which may be connected to the inlet 132 of the filtration unit 130. There may be a valve or a pump arranged at the outlet 132 of the pre-filter 170 to provide/output or to pump the spent CIP liquid C1 into the filtration unit 130, respectively.

Still with reference to Fig. 1, the system 100 may comprise a caustic supply source 150. The caustic supply source 150 may be arranged upstream the recovered CIP tank 140. The caustic supply source 150 may be configured to provide a concentrated CIP liquid C3 into the recovered CIP tank 140. The caustic supply source 150 may be a tank arranged upstream the recovered CIP tank 140. The caustic supply source 150 may comprise an inlet and an outlet 154. The outlet 154 of the caustic supply source 150 may be connected to an inlet 154 of the recovered CIP tank 140.

With reference to Fig. 2, a production system 200 of increasing a solid content of a food product F is shown. The system 200 comprises a system 100 for treating a clean-in-place (CIP) liquid, as shown in Fig. 1. The system 200 further comprises an evaporator 160 arranged downstream a recovered CIP tank 140 of the system 100. The evaporator 160 is configured to receive a liquid food product F. The evaporator 160 is configured to increase a solid content of the liquid food product F. The evaporator 160 is configured to output a liquid component LC and a concentrated food component CC. The evaporator 160 may be any conventional and commercially available evaporator. For instance, in the dairy industry, the evaporator 160 may be used to concentrate whole milk, skim milk, whey or whey protein concentrate. The evaporator 160 may output water LC and the concentrated whole milk, skim milk, whey or whey protein concentrate CC. The evaporator 160 may comprise one or more inlets 144, 162. One inlet 162 of the evaporator 160 may be configured to receive a liquid food product F. The evaporator 160 may comprise one or more outlets 122, 164, 166. One outlet 164 of the evaporator 160 may be configured to output the liquid component LC. Another outlet 166 of the evaporator 160 may be configured to output the concentrated food component CC.

Still with reference to Fig. 2, the system 200 further comprises a recovered CIP line 144 connected between the recovered CIP tank 140 and the evaporator 160 to provide the recovered CIP liquid C2 from the recovered CIP tank 140 of the system 100 into the evaporator 160. The recovered CIP line 144 may be an outlet of the system 100 such as an outlet 144 of the recovered CIP tank 140. The recovered CIP line 144 may be a pipe configured to be attached to an inlet 144 of the evaporator 160. One inlet 144 of the evaporator 160 may be connected to the recovered CIP line 144. The recovered CIP line 144 may be configured to be connected between the recovered CIP tank 140 and the evaporator 160 in a manner which per se is known in the art.

The system 200 further comprises a spent CIP return line 122 connected between the evaporator 160 and a spent CIP tank 120 of the system 100. The spent CIP return line 122 returns a spent CIP liquid C1 from the evaporator 160 to the spent CIP tank 120. The spent CIP return line 122 may be configured to be connected to an inlet of the system 100 such as an inlet 122 of the spent CIP tank 120. The spent CIP return line 122 may be a pipe configured to be attached to an outlet 122 of the evaporator 160. One outlet 122 of the evaporator 160 may connected to the spent CIP return line 122. The spent CIP return line 122 may be configured to be connected between the evaporator 160 and a spent CIP tank 120 in a manner which per se is known in the art.

The evaporator 160 is configured to receive the recovered CIP liquid C2 from the recovered CIP tank 140 of the system 100 via the recovered CIP line 144. The evaporator 160 is configured to clean 420 the evaporator 160. The evaporator 160 is configured to return the spent CIP liquid C1 to the spent CIP tank 120 via the spent CIP return line 122, subsequent to the cleaning 420. The evaporator 160 may typically be cleaned once or twice per day.

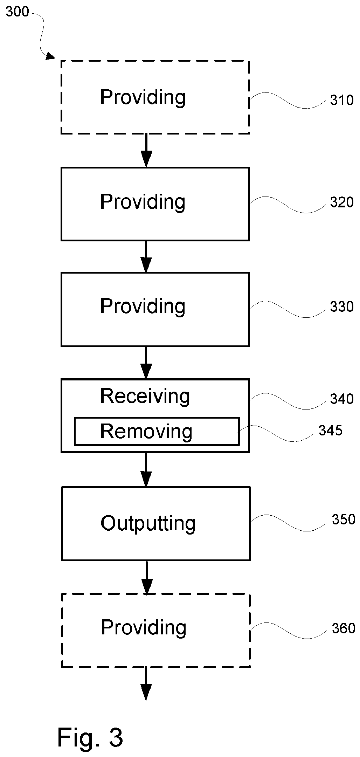

With reference to Fig. 3, a method 300 for treating a clean-in-place (CIP) liquid is shown. The method 300 comprises the step of providing 320 a spent CIP liquid C1 from a spent CIP tank 120. The spent CIP liquid C1 comprises residues R. The method 300 further comprises the step of providing 330 water W from a water source 110. The water W comprises calcium C. The method 300 further comprises the step of receiving 340 in a filtration unit 130 the spent CIP liquid C1 from the spent CIP tank 120 and the water W from the water source 110 to remove 345 the residues R and calcium C from the spent CIP liquid C1 and the water W by filtration, to thereby obtain a recovered CIP liquid C2. The method 300 further comprises the step of outputting 350 the recovered CIP liquid C2 and the water W to a recovered CIP tank 140.

The method 300 may further comprise the step of providing 310 the spent CIP liquid C1 into the spent CIP tank 120 prior to the step of providing 320 the spent CIP liquid C1 from the spent CIP tank 120.

The method 300 may further comprise the step of providing 360 a concentrated CIP liquid C3 into the recovered CIP tank 140 subsequent to the step of outputting 350 the recovered CIP liquid C2 and the water W to the recovered CIP tank 140.

The filtration unit 130 may be the only filtration unit 130 that receives 340 both the spent CIP liquid C1 and the water W respectively from the spent CIP tank 120 and from the water source 110 before the spent CIP liquid C1 and the water W are outputted 350 to the recovered CIP tank 140. The filtration unit 130 may be the only filtration unit 130 that is configured to remove 345 both the residues R and calcium C from the spent CIP liquid C1 and the water (W).

The steps of the method 300 for treating the CIP liquid may be performed in the same order, as defined above. Alternatively, the step of providing 320 the spent CIP liquid C1 from the spent CIP tank 120 and the step of providing 330 the water W from the water source 110 may be performed simultaneously. The water source 110, the spent CIP tank 120, the filtration unit 130, and the recovered CIP tank may be arranged and configured in accordance with the system 100 shown and described in relation to Fig. 1.

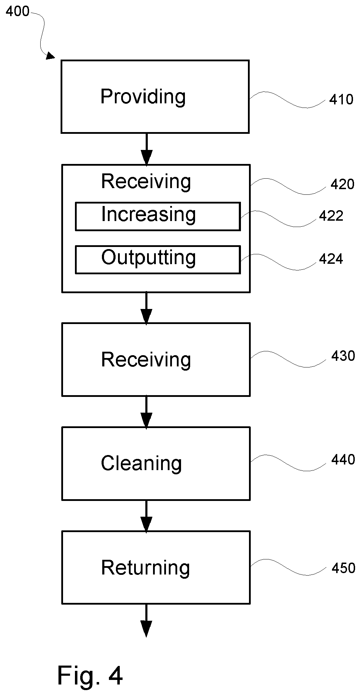

With reference to Fig. 4, a method 400 for increasing a solid content of a food product F is shown. The method 400 comprises the step of providing 410 a liquid food product F. The method 400 comprises the step of receiving 420 in an evaporator 160 the liquid food product F, to increase 422 a solid content of the liquid food product F and to output 424 a liquid component LC and a concentrated food component CC. The method 400 comprises the step of receiving 430 a recovered CIP liquid C2 in the evaporator 160 via a recovered CIP line 144 connected between a recovered CIP tank 140 and the evaporator 160. The method 400 comprises the step of cleaning 440 the evaporator 160 by the recovered CIP liquid C2. The method 400 comprises the step of returning 450 a spent CIP liquid C1 from the evaporator 160 to a spent CIP tank 120 via a spent CIP return line 122 connected between the evaporator 160 and a spent CIP tank 120, subsequent to the step of cleaning 440.

The steps of the method 400 for increasing the solid content of the food product F may be performed in the same order, as defined above. The evaporator 160, the recovered CIP line 144, and the spent CIP return line 122 may be arranged and configured in accordance with the system 200 shown and described in relation to Fig. 2.

From the description above follows that, although various embodiments of the invention have been described and shown, the invention is not restricted thereto, but may also be embodied in other ways within the scope of the subject-matter defined in the following claims.

## Claims

1. A system (100) for treating a clean-in-place, CIP, liquid, the system (100) comprising:
a spent CIP tank (120) configured to provide a spent CIP liquid (C1), the spent CIP liquid (C1) comprising residues (R),
a water source (110) configured to provide water (W), the water (W) comprising calcium (C),
a filtration unit (130), arranged downstream the spent CIP tank (120) and the water source (110), and
a recovered CIP tank (140), arranged downstream the filtration unit (130), **characterized in that**
the filtration unit (130) is configured to receive the spent CIP liquid (C1) from the spent CIP tank (120) and the water (W) from the water source (110), to remove the residues (R) and calcium (C) from the spent CIP liquid (C1) and the water (W) to obtain a recovered CIP liquid (C2), and to output the recovered CIP liquid (C2) and the water (W) to the recovered CIP tank (140).

2. The system (100) according to claim 1, wherein the water source (110) is arranged upstream the spent CIP tank (120) and wherein the water source (110) is configured to provide the water (W) into the spent CIP tank (120) such that the water (W) is received in the filtration unit (130) via the spent CIP tank (C1).

3. The system (100) according to claim 1, wherein the water source (110) is arranged upstream the filtration unit (130) and connected to the filtration unit (130) and wherein the water source (110) is configured to provide the water (W) into the filtration unit (130) such that the water (W) is directly received in the filtration unit (130).

4. The system (100) according to any of the preceding claims, wherein the system (100) comprises only one filtration unit (130) that is
arranged to receive both the spent CIP liquid (C1) and the water (W) before the spent CIP liquid (C1) and the water (W) are outputted to the recovered CIP tank (140), and
configured to remove both the residues (R) and calcium (C) from the spent CIP liquid (C1) and the water (W).

5. The system (100) according to any of the preceding claims, wherein the filtration unit (130) comprises a nano filtration unit, and wherein the nano filtration unit has a molecular weight cut-off, MWCO, in the range of 150 Da to 1000 Da.

6. The system (100) according to any of the preceding claims, wherein the system (100) comprises a pre-filter (170), wherein the pre-filter (170) is arranged downstream the spent CIP tank (120) and upstream the filtration unit (130) and wherein the pre-filter (170) is configured to remove particles, having sizes larger than the residues (R) and calcium (C), from the spent CIP liquid (C1) and the water (W).

7. The system (100) according to any of the preceding claims, wherein the system (100) comprises a caustic supply source (150) arranged upstream the recovered CIP tank (140) and configured to provide a concentrated CIP liquid (C3) into the recovered CIP tank (140).

8. The system (100) according to any of the preceding claims, wherein the calcium (C) content of the water (W) is at least 8 mmol per liter, or at least 16 mmol per liter.

9. A production system (200) of increasing a solid content of a food product (F), the system (200) comprising:
a system (100) for treating a clean-in-place, CIP, liquid, according to any of the preceding claims,
an evaporator (160) arranged downstream a recovered CIP tank (140) of the system (100) and configured to receive a liquid food product (F), to increase a solid content of the liquid food product (F) and to output a liquid component (LC) and a concentrated food component (CC),
a recovered CIP line (144) connected between the recovered CIP tank (140) and the evaporator (160) to provide the recovered CIP liquid (C2) from the recovered CIP tank (140) of the system (100) into the evaporator (160), and
a spent CIP return line (122) connected between the evaporator (160) and a spent CIP tank (120) of the system (100) to return a spent CIP liquid (C1) from the evaporator (160) to the spent CIP tank (120), wherein the evaporator (160) is configured to receive the recovered CIP liquid (C2) from the recovered CIP tank (140) of the system (100) via the recovered CIP line (144), to clean (420) the evaporator (160), and to return the spent CIP liquid (C1) to the spent CIP tank (120) via the spent CIP return line (122), subsequent to the cleaning (420).

10. A method (300) for treating a clean-in-place, CIP, liquid, the method (300) comprising the steps of:
providing (320) a spent CIP liquid (C1) from a spent CIP tank (120), the spent CIP liquid (C1) comprising residues (R),
providing (330) water (W) from a water source (110), the water (W) comprising calcium (C),
receiving (340) in a filtration unit (130) the spent CIP liquid (C1) from the spent CIP tank (120) and the water (W) from the water source (110), to remove (345) the residues (R) and calcium (C) from the spent CIP liquid (C1) and the water (W) by filtration, to thereby obtain a recovered CIP liquid (C2), and
outputting (350) the recovered CIP liquid (C2) and the water (W) to a recovered CIP tank (140).

11. The method (300) according to claim 10, wherein the filtration unit (130) is the only filtration unit (130) that
receives (340) both the spent CIP liquid (C1) and the water (W) respectively from the spent CIP tank (120) and from the water source (110) before the spent CIP liquid (C1) and the water (W) are outputted (350) to the recovered CIP tank (140), and
is configured to remove (345) both the residues (R) and calcium (C) from the spent CIP liquid (C1) and the water (W).

12. The method (300) according to claim 10 or 11, wherein the method (300) comprises the step of:
providing (310) the spent CIP liquid (C1) into the spent CIP tank (120) prior to the step of providing (320) the spent CIP liquid (C1) from the spent CIP tank (120).

13. The method (300) according to any of the claims 10-12, wherein the method (300) comprises the step of:
providing (360) a concentrated CIP liquid (C3) into the recovered CIP tank (140) subsequent to the step of outputting (350) the recovered CIP liquid (C2) and the water (W) to the recovered CIP tank (140).

14. A method (400) for increasing a solid content of a food product (F), the method (400) comprising the steps of:
providing (410) a liquid food product (F),
receiving (420) in an evaporator (160) the liquid food product (F), to increase (422) a solid content of the liquid food product (F), and to output (424) a liquid component (LC) and a concentrated food component (CC),
receiving (430) a recovered CIP liquid (C2) in the evaporator (160) via a recovered CIP line (144) connected between a recovered CIP tank (140) and the evaporator (160),
cleaning (440) the evaporator (160) by the recovered CIP liquid (C2), and
returning (450) a spent CIP liquid (C1) from the evaporator (160) to a spent CIP tank (120) via a spent CIP return line (122) connected between the evaporator (160) and a spent CIP tank (120), subsequent to the step of cleaning (440).
